# EUROPÄISCHE PATENTSCHRIFT

(11) **EP 1 051 341 B1**
(45) Veröffentlichungstag und Bekanntmachung des Hinweises auf die Patenterteilung: **05.09.2001**
(21) Anmeldenummer: 99923450.3
(22) Anmeldetag: 23.04.1999
(51) Int. Cl.: B65G 47/08, B65G 57/00, B65B 35/30

(54) **VORRICHTUNG ZUM BEHANDELN VON FLASCHEN**
DEVICE FOR THE TREATMENT OF BOTTLES
DISPOSITIF POUR LE TRAITEMENT DE BOUTEILLES

(30) Priorität: 23.04.1998 DE 29807325 U; 15.10.1998 DE 29818434 U
(43) Veröffentlichungstag der Anmeldung: 15.11.2000
(73) Patentinhaber: Certus Maschinenbau GmbH, 86316 Friedberg (DE)
(72) Erfinder: HÖFER, Gunter, D-86931 Prittriching (DE); HIRSCHEK, Herwig, D-86399 Bobingen (DE)
(74) Vertreter: Ernicke, Hans-Dieter, Dipl.-Ing.
(86) Internationale Anmeldenummer: EP9902743
(87) Internationale Veröffentlichungsnummer: WO9955603

(56) Entgegenhaltungen:
- WO-A-98/47795
- DE-A- 3 142 078
- DE-A- 3 149 307
- DE-A- 19 535 907
- FR-A- 2 523 932
- FR-A- 2 593 776
- FR-A- 2 697 512
- US-A- 3 833 110

## Beschreibung

Die Erfindung betrifft eine Vorrichtung zum Behandeln von Flaschen, insbesondere von leeren Kunststoff-Flaschen mit den Merkmalen im Oberbegriff des Hauptanspruchs.

Aus der DE-A-195 35 907 ist eine Behandlungsvorrichtung für leere Glasflaschen bekannt. Sie besteht aus einem Palettierer und einer vorgeschalteten Sammeleinrichtung, welche mit einem Flaschenförderer verbunden ist. Die Sammeleinrichtung dient zur Übernahme und Lagenbildung der reihenweise von dem Flaschenförderer zugeführten Flaschen. Die Sammeleinrichtung besitzt eine Auflaufvorrichtung mit mehreren Gassen, zu der die Flaschen reihenweise vom Flaschenförderer zugeführt und dort in Reihengruppiert werden. Die Flaschen wandern dann stehend entlang der Gassen zu einer Schiebevorrichtung, in der Flaschenlagen gebildet werden. Von hier werden die Flaschen über ein Ablaufförderband und ein anschließendes Lagentransportband zu einer Transportstation und dem Palettierer. Hier kann sie der Palettierer mit Flaschengreifern lagenweise erfassen und auf einem Palettenboden unter Einschieben von Zwischen- und Decklagen zu einem Flaschenstapel, der sogenannten Palette, aufbauen. Diese Sammel- Transport- und Palettiertechnik ist für schwere und standfeste Flaschen geeignet. Für leichtgewichtige Kunststoff-Flaschen, insbesondere sogenannte PET-Flaschen, ist sie hingegen nicht mit ausreichender Sicherheit verwendbar. Diese Flaschenarten sind wegen ihres niedrigen Gewichtes, wegen elektrostatischer Aufladung und aufgrund der hohen Zuführgeschwindigkeit des Flaschenförderers schwer zu handhaben.

Ferner ist es in der Praxis bekannt, solche PET-Flaschen über Luftförderer zu transportieren. Diese Förderer sind sehr bauaufwendig, kosten viel Platz und sind teuer. Außerdem ergeben sich erhebliche Hygieneprobleme.
Es ist Aufgabe der vorliegenden Erfindung, eine Möglichkeit zur betriebssicheren Handhabung auch dieser kritischen Flaschenarten aufzuzeigen.

Die Erfindung löst diese Aufgabe mit den Merkmalen im Hauptanspruch.
Die Sammeleinrichtung und die Umsetzung der Flaschen auf einen transportablen Zwischenträger bietet gegenüber dem Stand der Technik eine höhere Betriebssicherheit und ermöglicht eine Vielzahl von Funktionsvarianten. Dies gilt vor allem mit Hinblick auf die steigerbare Anlagenkapazität, auf Speichermöglichkeiten und verschiedene interne und externe Trägerkreisläufe. Insbesondere ist es dabei von Vorteil, daß der Zwischenträger während des Umsetzvorgangs stehen kann, was für eine hohe Absetz- und Positioniergenauigkeit sorgt. Die Lagenbildung auf dem Zwischenträger erlaubt eine palettiergerechte Kommissionierung der Flaschen und eine hohe Palettierkapazität.

Für eine hohe Anlagenleistung empfiehlt es sich, die Sammeleinrichtung mit mehreren Zwischenträgern auszurüsten und diese parallel oder im Umlauf zwischen dem Umsetzer und dem Palettierer hin und her zu bewegen. Der Umsetzer hat dadurch keine Unterbrechungen wegen des Zwischenträgertransports. Hierbei ist es auch günstig, auf einem Zwischenträger zwei oder mehr der Palettengröße entsprechende Flaschenlagen anzuordnen. Hierdurch wird die Leistungskapazität weiter erhöht und außerdem eine Puffermöglichkeit bei eventuellen Betriebsstörungen geschaffen.

Vor der Sammeleinrichtung ist pro Förderstrang eine Vereinzelungsvorrichtung angeordnet. Sie hat den Vorteil, daß damit die Flaschen zuverlässig vereinzelt und dabei auch zumindest zeitweise voneinander getrennt werden können. Dies ist vor allem wegen der elektrostatischen Aufladung und der Adhäsionskräfte sowie der noch weichen Wandung von frisch produzierten Kunststofflaschen günstig. Über der Vereinzelungsvorrichtung können zudem die zur Lagenbildung benötigen Flaschen abgezählt und funktionsgereicht der Sammeleinrichtung zugeführt werden. Die Vereinzelungsvorrichtung steigert die Betriebssicherheit und die Funktionsgenauigkeit der Sammeleinrichtung.

Die Erfindung sorgt vorzugsweise durch eine im wesentlichen ständige Führung der Flaschen von der Reihenaufnahme am Flaschenförderer bis zum Palettierer dafür, daß die Flaschen stets eine gesicherte Lage haben und auch genau positioniert werden können. Die Flaschen können nicht mehr umfallen und können keine Betriebsstörungen mehr verursachen. Insbesondere ist die erfindungsgemäße Vorrichtung in der Lage, auch Flaschen mit sehr hoher Zuführgeschwindigkeit aufzunehmen, reihenweise überzusetzen, in Lagen anzuordnen und den Palettierer auf dem Zwischenträger zuzuführen. Die erfindungsgemäße Vorrichtung hat dadurch ein sehr hohes Leistungsvermögen.

Von besonderem Vorteil ist, daß auch der Reihenschluß der mit seitlichem Abstand zugeführten Flaschenreihen mit hoher Sicherheit vorgenommen wird. Der Reihenschluß erfolgt beim Übersetzen innerhalb der Greifeinrichtung durch seitlich verstellbare Reihengreifer. Die Flaschen können dann in der letztendlich auf dem Zwischenträger gebildeten Flaschenlage in dichter und für die letztendliche Palettierung geeigneter Lage angeordnet sein. Die erfindungsgemäße Vorrichtung läßt sich dabei auch mit relativ geringem Aufwand auf unterschiedliche Flaschenformate einstellen und umrüsten.

Beim Übersetzen oder Umsetzen der Flaschenreihen kann eine Zwischenspeicherung oder Pufferung über einen Stautisch oder dergleichen stattfinden. Es ist aber auch möglich, die Greifeinrichtung des Umsetzers direkt an den Flaschenförderern bzw. im Flaschenerzeuger zu beladen und die Flaschen unmittelbar in die Reihengreifer zu schieben. Dies ermöglicht eine sehr schnelle Umsetzung und Flaschenlagenbildung.

Für die Flaschenführungen sind in den Unteransprüchen verschiedene Ausführungsformen angegeben. In der Reihenaufnahme sorgen geländerartige und in der Weite verstellbare Flaschenführungen für die optimale seitliche Führung. Zusätzlich kann in den Reihenaufnahmen über bewegliche und gesteuert angetriebene Anschläge eine axiale Führung geschaffen werden, so daß die übernommenen Flaschen in keiner Richtung umfallen können. Hierbei lassen sich über einen geeigneten Versatz der Anschläge die Reihen so axial zueinander verschieben, daß sie mit Reihenversatz auf Lücke zueinander angeordnet sind und sich mit maximaler Dichte in der Flaschenlage packen lassen.

Die bevorzugte Ausführungsform der Flaschenführung am Zwischenträger erlaubt es, die Flaschen eng aneinander anzuschließen und trotzdem eine seitliche Führung zu bieten. Diese Führung erleichtert auch das Einsetzen der Flaschenreihen auf dem Zwischenträger und die Aufnahme der Flaschenlage am Palettierer.

Die Anordnung einer Sammeleinrichtung in unmittelbarer Nähe zu einem Flaschenerzeuger ermöglicht es, die bau- und platzaufwendigen großen Luftförderer einzusparen und mit kurzen Ausgabeförderern auszukommen. Die produzierten Flaschen werden dadurch sehr schnell aufgenommen, umgesetzt und auf ein oder mehreren beweglichen Zwischenträgern zur Weiterbehandlung abgesetzt.

Vorzugsweise ist einem einzelnen Flaschenerzeuger jeweils eine einzelne Sammeleinrichtung mit einer auf die Flaschenerzeugung abgestellten Kapazität zugeordnet. Für Anlagen größerer Kapazität mit mehreren Flaschenerzeugern oder Blaseinrichtungen sind entsprechend mehrere Sammeleinrichtungen vorgesehen. Bei der erfindungsgemäßen Ausgestaltung ist die Fehler- und Ausfallneigung bei der direkten Beladung der Zwischenträger an dem Flaschenerzeuger weitestgehend minimiert. Dies erhöht die Betriebssicherheit der gesamten Anlage. Die Kapazitätsfrage kann durch eine gemeinsame Anbindung der Sammeleinrichtungen auf eine gemeinsame Transporteinrichtung und insbesondere durch Anordnung eines Zwischenlagers für die leeren und/oder beladenen Zwischenträger gelöst werden. Dies ermöglicht insbesondere einen zentralen Palettierer für die gesamte Anlage und eine weitere Verringerung des Ausfallrisikos. Der Zwischenspeicher gleicht einerseits die unterschiedlichen Massendurchsätze der Flaschenerzeuger und des zentralen Palettierers aus und kann andererseits auch als Puffer bei Ausfall oder Störung einzelner Anlagenkomponenten dienen. Vor allem ist aber der Flaschenerzeuger von irgendwelchen Störeinflüssen aus dem Bereich Palettierer oder Fördersystem entkoppelt.

Die erfindungsgemäße Sammel- und Palettiervorrichtung kann zu größeren Flaschenbehandlungsanlagen ausgebaut werden, wobei die einzelnen Vorrichtungen einander überschneiden und ergänzen können. Hierbei lassen sich auch die Anzahl und Zuordnung der Einzelkomponenten, Sammeleinrichtung und Palettierer in geeigneter Weise anpassen.

Die erfindungsgemäße Sammel- und Palettiervorrichtung erfordert trotz hoher Sicherheit einen relativ geringen konstruktiven und steuertechnischen Aufwand. Sie braucht auch wenig Platz und läßt sich in der vorerwähnten Weise beliebig ausbauen. Sie kann auch an bestehenden Anlagen nachgerüstet werden. Die erfindungsgemäße Sammel- und Palettiervorrichtung ist nicht an bestimmte Materialien oder Formate von Flaschen gebunden, sondern kann für beliebige Flaschen eingesetzt werden. Sie erfordert ferner kein besonders ausgebildetes Bedienungspersonal.

In der bevorzugten Ausführungsform zirkulieren die Zwischenträger innerhalb des Flaschenbehandlungssystems und dienen zum lageweisen Transport der leeren Flaschen zwischen Flaschenerzeuger und Palettierer. Darüber hinaus können die Zwischenträger aber auch in einem größeren Kreislauf zirkulieren, indem sie selbst als Palettenbestandteil fungieren und zusammen mit den leeren Flaschen zunächst zur Füllanlage und von dort gegebenenfalls auch weiter über die Handelsverbindungen bis zum Kunden gelangen. Von hier aus können sie gegebenenfalls auch wieder zurück in das Flaschenbehandlungssystem geführt werden. Diese Form von Zwischenträgern mit einer vorzugsweise permanenten Flaschenführung im gesamten Kreislauf erleichtert die verschiedenen Flaschenbehandlungsvorgänge und vereinfacht den Bau- und Maschinenaufwand beim Flaschenerzeuger, Befüller und bei der Logistik.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Flaschenbehandlungsvorrichtung mit mehreren Sammelvorrichtungen und vorgeschalteten Vereinzelungsvorrichtungen in einem Anlagenschema,
- Figur 2:: eine vergrößerte Einzeldarstellung einer Flaschenbehandlungsvorrichtung gemäß Figur 1,
- Figur 3:: eine Variante der Flaschenbehandlungsvorrichtung von Figur 1 und 2,
- Figur 4:: die Sammeleinrichtung einer Flaschenbehandlungsvorrichtung in einer perspektivischen Darstellung,
- Figur 5:: eine Draufsicht auf eine Variante der Sammeleinrichtung von Figur 4,
- Figur 6:: eine weitere Variante zu Figur 4 und 5 in vergrößerter Draufsicht und
- Figur 7:: eine Detaildarstellung der Vereinzelungsvorrichtung.

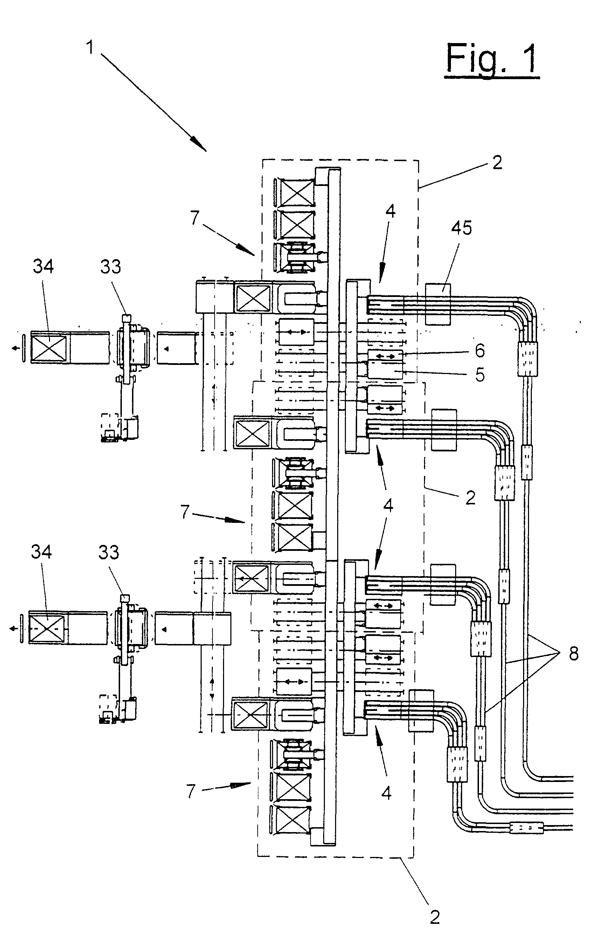

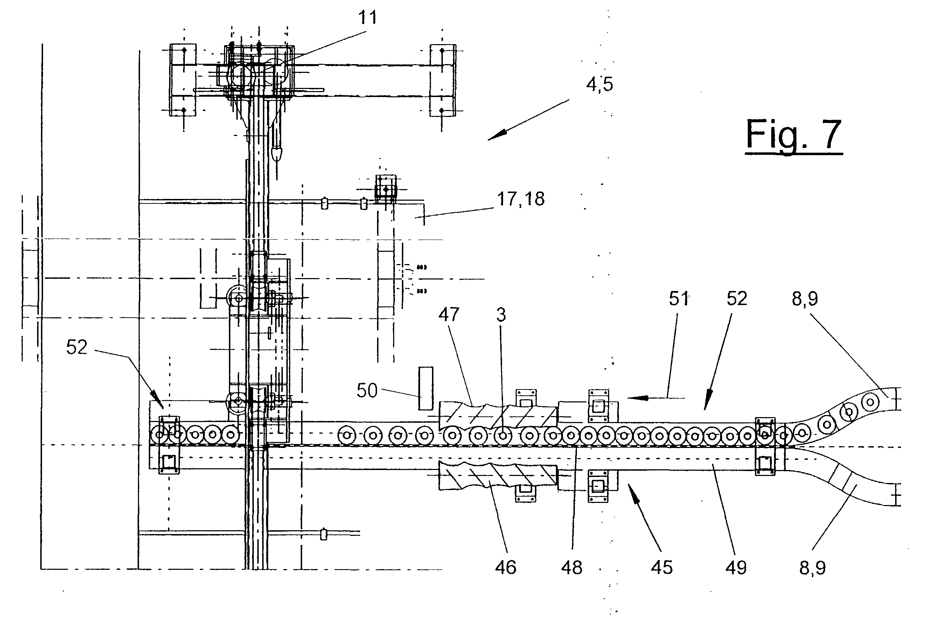

Figur 1, 2 und 3 verdeutlichen in einem Schemaplan eine Flaschenbehandlungsvorrichtung (1), die ein oder mehrere Sammel- und Palettieranlagen (2) beinhalten kann. Die Sammel- und Palettieranlage (2) besteht jeweils aus einer Sammeleinrichtung (4) und einem Palettierer (7). Die Sammeleinrichtungen (4) weisen ihrerseits ein oder mehrere Umsetzer (5) und ein oder mehrere bewegliche bzw. transportable Zwischenträger (6) auf, welche die Sammeleinrichtung (4) mit dem zugehörigen Palettierer (7) verbinden. Den Sammeleinrichtungen ist jeweils eine Vereinzelungsvorrichtung (45) vorgeschaltet, die in Figur 7 näher dargestellt ist.

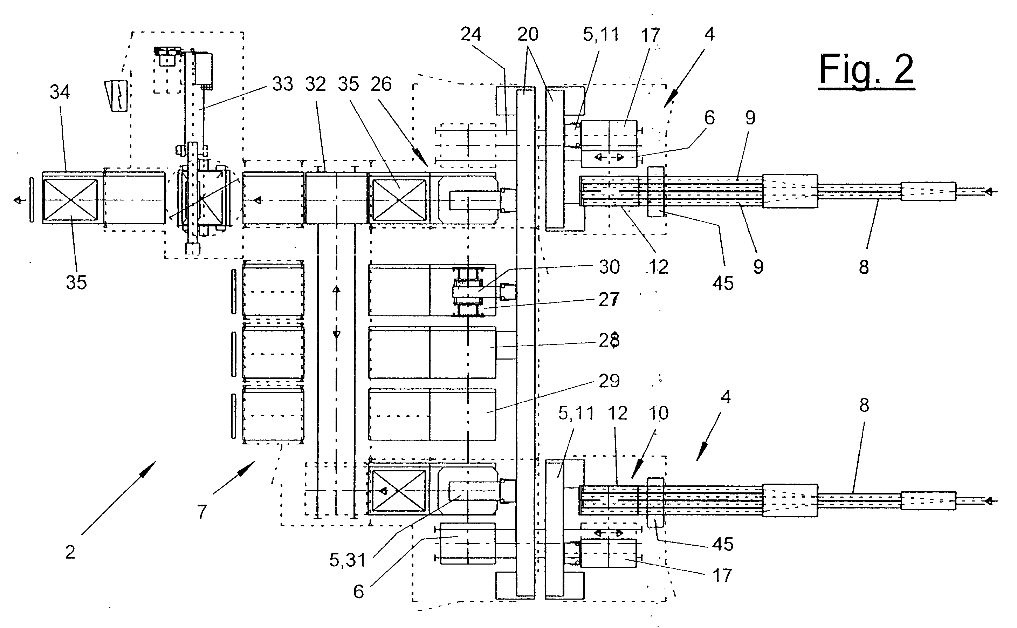

Die Sammel- und Palettieranlage (2) nimmt die in ein oder mehreren Schlangen oder Strängen (9) von einem Flaschenerzeuger (36) (in Figur 1 und 2 nicht dargestellt) über ein oder mehrere Flaschenförderer (8) zugeführten Flaschen (3) auf, sammelt sie in Flaschenlagen (25) und stapelt diese zu mehrlagigen Paletten (35) auf. An den Palettierer (7) können sich ausgangsseitig ein oder mehrere Verpackungseinrichtungen (33) nebst Ausgabestationen (34) anschließen.

In der gezeigten Ausführungsform von Figur 1 hat das Flaschenbehandlungssystem (1) z.B. drei Sammel- und Palettieranlagen (2), die nebeneinander in Reihe angeordnet sind. Gestrichelte Linien verdeutlichen die Anlagengrenzen. Figur 2 zeigt die mittlere Sammel- und Palettieranlage (2) in einer größeren Darstellung.

An die mittlere Anlage (2) sind zwei Flaschenförderer (8) und an die beiden äußeren Anlagen (2) je ein Flaschenförderer (8) angeschlossen. Die Flaschenförderer (8) sind in Figur 1 und 2 vorzugsweise als Luftförderer ausgebildet. Diese weisen einen geschlitzten Luftströmungskanal auf, in dem die Flaschen (3) an dem besagten Kragen hängend geführt und von einer im Kanal entlangschießenden Luftströmung vorwärts getrieben werden. Die Flaschen (3) bewegen sich im Flaschenförderer (8) mit einer sehr hohen Geschwindigkeit von z.B. zehn Flaschen pro Sekunde. Um die Flaschen (3) trotzdem noch handhaben zu können, wird jeder Flaschenförderer (8) nach und nach über Weichen in mehrere Stränge (9) aufgeteilt. An den Sammel- und Palettieranlagen münden dann beispielsweise je vier solcher Stränge (9) parallel nebeneinander.

Der Flaschenerzeuger (36) besteht z.B. aus ein oder mehreren Blasmaschinen für Kunststoff-Flaschen. Er ist im Ausführungsbeispiel von Figur 1 und 2 in größerem Abstand zu der Sammel- und Palettieranlage (2) angeordnet, wodurch die Flaschenförderer (8) eine entsprechend große Länge haben und dazu vorzugsweise in der vorerwähnten Art als Luftförderer ausgebildet sind.

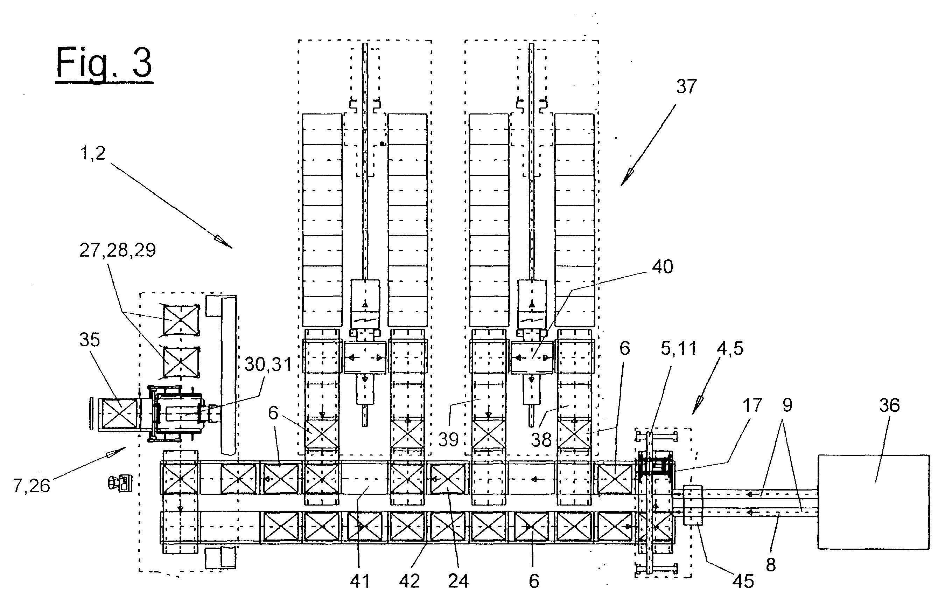

In der Variante von Figur 3 befindet sich der Flaschenerzeuger (36) in unmittelbarer Nähe an der Sammel- und Palettieranlage (2). Die Flaschenförderer (8) sind hier vorzugsweise als kurze und gerade Förderer ausgebildet, die die vom Flaschenerzeuger (36) produzierten und laufend ausgegebenen Flaschen (3) in beispielsweise zwei Schlangen oder Strängen (9) an die Sammeleinrichtung (4) mit dem Umsetzer (5) übergeben. Vor oder an der Übergabestelle können sich auch Verzweigungen auf mehr als zwei Stränge (9) befinden.

Der oder die Flaschenförderer (8) können in beliebig geeigneter Weise ausgebildet sein. Es können beispielsweise kurze Luftförderer sein. Es kann sich aber auch um eine beiliebige andere geeignete Konstruktion handeln. Vorzugsweise können die Flaschenförderer (8) eine geeignete und vorzugsweise kleine Staustrecke oder Pufferstrecke zur Übergabe der kontinuierlich in Schlangen hintereinander zugeführten Flaschen (3) an den intermittierend arbeitenden Umsetzer (5) aufweisen. In einer abgewandelten Ausführungsform kann der Flaschenerzeuger (36) seine Flaschen (3) auch direkt an den Umsetzer (5) übergeben.

Die Sammeleinrichtung (4) hat die Aufgabe, die in ein oder mehreren Reihen zugeführten Flaschen (3) zu mehrreihigen Flaschenlagen (25) zu ordnen und die Zwischenträger (6) damit zu beladen. Dabei ist jeder Sammeleinrichtung (4) eine Vereinzelungsvorrichtung (45) für die Flaschen (3) vorgeschaltet. Figur 7 zeigt diese Anordnung im Detail, wobei die Zuordnung der Flaschen (3) nur bei einem Förderstrang (9) dargestellt ist. In Figur 1 bis 3 sind die Vereinzelungsvorrichtungen (45) nur schematisch dargestellt.

Die Vereinzelungsvorrichtung (45) dient dazu, die jeweils in Reihen oder Fördersträngen (9) zugeführten Flaschen (3) zu vereinzeln und dabei in Förderrichtung (51) voneinander zumindest zeitweise etwas zu distanzieren. Pro Strang (9) ist eine Vereinzelungsvorrichtung (45) vorgesehen. Dabei kann der Vereinzelungsvorrichtung (45) auch eine Zähleinrichtung (50) zugeordnet oder nachgeordnet sein, mit der die vereinzelten Flaschen zuverlässig abgezählt und dem Umsetzer (5) in der richtigen Anzahl zugeführt werden können. In Förderrichtung (51) kann vor der Vereinzelungsvorrichtung (45) auch eine Staustrecke (52) angeordnet sein.

Der Flaschenerzeuger (36) bzw. die Blasmaschine produziert mit hoher Kapazität Kunststofflaschen, die auf einem maschineneigenen Flaschenförderer (8) oder einem Luftförderer (8) mit geringfügigen Abständen ausgegeben werden. Diese frisch produzierten Flaschen haben eine elektrostatische Aufladung und außerdem noch eine relativ weiche Wandung. Die Flaschen (3) neigen dazu, bei Kontakt aneinander zu haften. Wegen der Adhäsionskräfte kann dabei auch eine Beschädigungsgefahr bestehen. Vor der Vereinzelungsvorrichtung (45) kann sich dafür eine Entladestation (nicht dargestellt) für die zumindest teilweise Erdung und Entladung der elektrostatischen Ladung der Flaschen (3) befinden.

Aus dem Flaschenförderer (8) kommend werden die vorzugsweise hängend transportierten Flaschen (3) zunächst auf die Staustrecke (52) vor der Vereinzelungsvorrichtung (45) gebracht. In der Staustrecke (52) bzw. in der VereinzeLungsvorrichtung (45) kann eine Gleitstrecke (49) vorhanden sein, die vorzugsweise aus einem in Förderrichtung (51) angetriebenen Bandförderer, insbesondere einem Plattenbandförderer, besteht. Auf diese Gleitstrecke (49) werden die Flaschen (3) von den Flaschenförderern (8) übergeben und darauf abgesetzt. In der Staustrecke (52) rücken die Flaschen (3) zusammen und können in Kontakt miteinander kommen.

Die Vereinzelungsvorrichtung (45) besteht in der bevorzugten und dargestellten Ausführungsform aus einer Schnecke (46) pro Flaschenförderer (8) bzw. Förderstrang (9). Die motorisch angetriebene Schnecke (46) ist im wesentlichen längs der Förderrichtung (51) ausgerichtet. Der Antrieb kann in Abhängigkeit von der Zähleinrichtung (50) gesteuert werden. Die Schnecke (46) ist vorzugsweise konisch ausgebildet, wobei die Konusform sich in Förderrichtung (51) verbreitet. Dabei vergrößert sich der Außendurchmesser der Schnecke (46). Der Innendurchmesser bleibt hingegen gleich. Auf diese Weise verändert sich über die Schneckenlänge die Zahnhöhe.

Die Schnecke (46) wirkt jeweils mit einer gegenüberliegenden Wand (48) zusammen. Diese kann starr ausgebildet oder als bewegliche umlaufende Bandführung oder dergleichen gestaltet sein. Auch im Bereich vor und hinter der Schnecke (46) befinden sich an der Gleitstrecke (49) entsprechende Seitenführungen in Form von Wänden, Geländern oder dergleichen. Vom Flaschenförderer (8) werden die Flaschen (3) über die Staustrecke (52) mit Druck an die Einlaßseite der Schnecke (46) heranbewegt und aufgestaut. Durch die Konusform der Schnecke (46) wird ein Einlauftrichter gebildet, der ein sicheres Erfassen und Separieren der Flaschen (3) ermöglicht. Durch den gleichbleibenden Innendurchmesser der Schnecke (46) werden die Flaschen (3) dabei zuverlässig zwischen der Wand (48)und dem Zahnfuß bzw. dem Schneckengang (47) seitlich geführt und von der Schneckenwindung vorwärtsbewegt. Die Schnecke(46) kann sich dabei mit gleicher Geschwindigkeit oder etwas schneller als der Bandförderer (49) bewegen.

Mit der nachgeschalteten Zähleinrichtung (50) werden die aus der Schnecke (46) kommende vereinzelten Flaschen (3) gezählt. Die Zähleinrichtung (50) kann hierzu in beliebig geeigneter Weise ausgebildet sein. In der gezeigten Ausführungsform handelt es sich um eine Lichtschranke mit einer entsprechenden Steuerung und einem Zählwerk. Hierdurch wird die vom Umsetzer (5) in einer Reihe aufnehmbare Flaschenzahl genau bestimmt und eingestellt. Die Schnecke (46) wird solange angetrieben und gedreht, bis die benötigte Flaschenzahl erreicht ist. Am Ende der Gleitstrecke (49) kann ein Anschlag sein, an dem sich die vorher vereinzelten Flaschen (3) wieder aufstauen und in Kontakt miteinander kommen. Ist die benötigte Flaschenzahl erreicht, bleibt die Schnecke (46) kurzzeitig stehen, bis der Umsetzer (5) die Flaschenreihe erfaßt und zum Zwischenträger (6) abtransportiert hat. Sobald der Umsetzer (5) wieder aufnahmebereit ist, dreht die Schnecke (46) wieder und fördert wieder die Flaschen (3). Der Bandförderer (49) kann dabei ebenfalls taktweise angetrieben werden. Alternativ ist auch ein kontinuierlicher Antrieb mit entsprechender Gleitmöglichkeit gegenüber den Flaschen (3) möglich.

Wie Figur 3 im weiteren verdeutlicht, kann die Sammel- und Palettieranlage (2) auch mindestens ein Zwischenlager (37) besitzen, das zwischen der Sammeleinrichtung (4) und dem Palettierer (7) angeordnet ist. Für den Transport der einzeln beweglichen Zwischenträger (6) ist eine Transporteinrichtung (24) vorgesehen, die vorzugsweise im Kreislauf arbeitet und einen Vorlauf (41) und einen Rücklauf (42) aufweist. Die Transporteinrichtung (24) verbindet die Sammeleinrichtung (4) mit dem Palettierer (7). Außerdem ist auch das Zwischenlager (37) an die Transporteinrichtung (24) und dabei vorzugsweise an deren Vorlauf (41) angeschlossen.

Das Zwischenlager (37) kann in beliebig geeigneter Weise ausgebildet sein, z.B. als Hochregallager. Es kann ein oder mehrere Lagerreihen aufweisen mit entsprechend ein oder mehreren geeigneten Regalförderzeugen (40). Die einzelnen Lagerbereiche haben jeweils eine Eingabe (38) und eine Ausgabe (39) für die beladenen Zwischenträger (6), die beide vorzugsweise an den Vorlauf (41) angeschlossen sind. Das Regalförderzeug (40) übernimmt dann regalintern die Zwischenträger (6) von der Eingabe und speichert sie in den vorgesehenen Lagerpositionen. Umgekehrt erfolgt vom Regalförderzeug (40) die Auslieferung der Zwischenträger (6) über die Ausgabe (39). Über den Vorlauf (41) gelangen sie dann direkt zum Palettierer (7).

Auf dem Rücklauf (42) werden vom Palettierer (7) die entladenen und leeren Zwischenträger (6) der Sammeleinrichtung (4) mit dem Umsetzer (5) wieder zugeführt. Hierbei kann der Rücklauf (42) eine Staustrecke besitzen. An den Rücklauf (42) kann aber auch ein eigenes Lager für die Pufferung der Zwischenträger (6) angeschlossen sein. Dieses Trägerlager ist der Übersicht halber nicht dargestellt.

Der Vorlauf (41) und der Rücklauf (42) sind vorzugsweise als gerade Förderstränge ausgebildet. Es kann sich hierbei um Förderbänder, Rollengänge oder andere geeignete Fördermittel handeln. An den Endpunkten findet über entsprechende Querförderer eine Umsetzung der Zwischenträger (5) statt. An dem endseitigen Querförderer übernimmt der Palettierer (7) die Flaschenlagen (25) von den Zwischenträgern (6), so daß die leeren Zwischenträger (6) dann auf den Rücklauf (42) zurückfahren können. Am vorderen Ende befindet sich der Querförderer im Bereich der Sammeleinrichtung (4) bzw. des Umsetzers (5). Dadurch können ohne Zeit- und Taktunterbrechung sehr schnell fertig beladene Zwischenträger (6) auf den Vorlauf (41) abgefördert und neue leere Zwischenträger (6) in die Beladeposition gebracht werden. Dadurch kann außerdem während des Transports und während der Entladung am Palettierer (7) bereits der nächste leere Zwischenträger (6) an der Sammeleinrichtung (4) beladen werden.

Figur 1, 2 und 4 zeigen eine Variante für die Zwischenträger (6) und die Transporteinrichtung (24). In der gezeigten Ausführungsform handelt es sich um ein Shuttle, das gerade Vorwärts- und Rückwärtsbewegungen ausführt und die Zwischenträger (6) von ihrer Aufnahmeposition an der Sammeleinrichtung (4) zur Übergabeposition am Palettierer (7) auf gerader Bahn hin und zurück bewegt.

In der Ausführungsform von Figur 1 ist eine weitere Variante dargestellt. Hier sind z.B. an den beiden äußeren Sammeleinrichtungen (4) je zwei Zwischenträger (6) mit Shuttles (24) parallel nebeneinander angeordnet, die zeitversetzt arbeiten. Dies ermöglicht ebenfalls eine Überschneidung der Taktzeiten beim Be- und Entladen sowie beim Transport der Zwischenträger (6). Die Transportrichtung der Zwischenträger (6) verläuft in der bevorzugten Ausführungsform längs der Flaschenreihen (14) und quer zu den Traversen (20).

In Figur 1 sind außerdem Sammeleinrichtungen (4) mit unterschiedlicher Kapazität dargestellt. Die beiden äußeren Sammeleinrichtungen (4) sind auf eine hohe Leistung von z.B. 100.000 Flaschen pro Stunde ausgelegt und haben dazu entsprechend schnelle Übersetzer (5). Die mittlere Sammeleinrichtung (4) hat eine geringere Kapazität und langsamere Übersetzer (5). Zum Ausgleich und aus Platzgründen kann hier allerdings die Sammeleinrichtung (4) zwei Übersetzer (5) mit jeweils einem Zwischenträger (6) nebst Transporteinrichtung (24) aufweisen, wobei jedem Übersetzer (5) ein Flaschenförderer (8) in vorbeschriebenen Weise zugeordnet ist. Die Übersetzer (5) können jeweils eine separate eigene oder eine gemeinsame Traverse (20) haben.

Die Flaschen (3) bestehen vorzugsweise aus Kunststoff, insbesondere Polyethylentherephthalat. Diese sogenannten PET-Flaschen sind dünnwandig und haben ein niedriges Gewicht. Am Flaschenhals besitzen sie einen umlaufenden und seitlich vorstehenden Kragen, an dem sie z.B. durch die Flaschenförderer (8) hängend gegriffen und geführt werden können. Am Boden haben diese Flaschen in der Regel eine zentrale Einbuchtung und am umgebenden Rand mehrere hochlaufende Einkerbungen, so daß die Standfläche von fünf rund um die Flaschenmittelachse verteilten Auflagepunkten gebildet wird. Der Durchmesser der Standfläche ist dabei kleiner als der Außendurchmesser der Flaschen, so daß die PET-Flaschen eine gewisse Labilität haben. Die Flaschen (3) konnen sich außerdem elektrostatisch aufladen und sich dadurch gegenseitig abstoßen. Durch die geringe Standfestigkeit und das niedrige Gewicht reagieren die Flaschen (3) empfindlich auf mechanische Stöße, Luftströmungen etc. und neigen zum Umfallen.

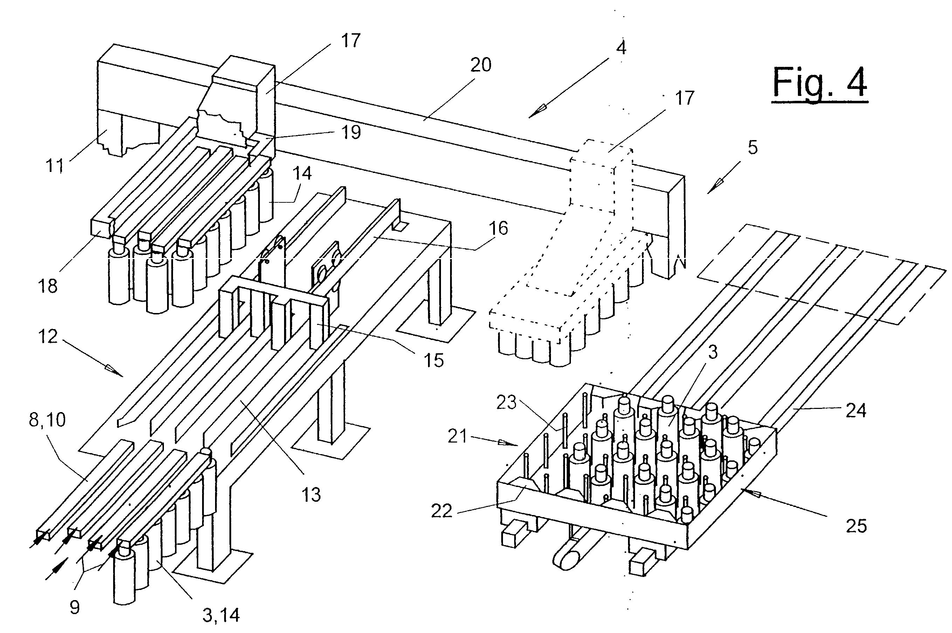

Figur 4 verdeutlicht den Mündungs- oder Endbereich (10) des Flaschenförderers (8) an der Sammeleinrichtung (4). In Figur (4) ist cler Übersichtlichkeit wegen die Vereinzelungsvorrichtung (45) nicht dargestellt. Hier kommen die Flaschen (3) strangweise in Reihen oder Schlangen hintereinander an und werden durch die Vereinzelungsvorrichtung am Ende des Förderers (8) gestoppt. In diesem Bereich befindet sich die Stau- oder Auslaufstrecke (52), an der auch z.B. die Förderluft abgeblasen wird. Die im Endbereich (10) befindlichen Flaschen (3) werden von hinten durch die nachdrängenden Flaschen nach vorn getrieben. Aus Figur 4 ist auch ersichtlich, wie die Flaschen (3) am Kragen in den Förderkanälen hängen. In den Luftförderern (8) und in der Staustrecke (52) sind die Flaschen (3) geführt und gegen Umfallen gesichert.

Figur 4 zeigt eine Ausführungsform der Sammeleinrichtung (4) im einzelnen. Die Ausführung entspricht Figur 1 und 2, kann aber auch bei einer Anlage gemäß Figur 3 eingesetzt werden.

Die Sammeleinrichtung (4) besteht jeweils aus mindestens einer Reihenaufnahme (12) und mindestens einem Umsetzer (5) sowie vorzugsweise mehreren Zwischenträgern (6). Die Sammeleinrichtung (4) weist mehrere formschlüssige Flaschenführungen (13,18,21) auf. Dadurch werden die Flaschen (3) vom Flaschenförderer (8) reihenweise übernommen, auf den Zwischenträger (6) umgesetzt, zu einer Flaschenlage (25) gruppiert und dann dem Palettierer (7) zugeführt, wobei die Flaschen (3) vorzugsweise und im wesentlichen ständig so geführt sind, daß sie nicht umfallen können und sich nur in begrenzter und kontrollierter Weise bewegen können. Der Zwischenträger (6) steht während des Umsetz- und Beladevorgangs.

Die Reihenaufnahme (12) ist an den Endbereich (10) des Flaschenförderers (8) angeschlossen. Die Reihenaufnahme (12) besitzt einen beispielsweise stationären Stautisch mit mehreren Aufnahmegassen und geländerartigen Flaschenführungen (13), die sich in entsprechender Zahl und in Verlängerung der Endbereiche (10) des Flaschenförderers (8) erstrecken und die vom Flaschenförderer (8) übernommenen Flaschen (3) seitlich führen. Die Geländer (13) sind in ihrer Weite verstellbar und lassen sich auf verschiedene Flaschenformate anpassen. Außerdem können sie seitlich verschoben werden, um in ihrer Zahl und Anordnung gegenüber dem Flaschenförderer (8) angepaßt zu werden. An den fördererseitigen Enden können die Geländer (13) schräge Leitflächen zum Angleiten und Führen der Flaschen (3) haben.

Auf dem Stautisch (12) können die Flaschen (3) stehend entlangrutschen. Alternativ kann der Stautisch (12) auch statt der stationären Grundfläche ein Förderband oder dergleichen aufweisen, das sich in Förderrichtung der Flaschen (3) bewegt. Zur Aufnahme der Flaschen (3) werden die Verschlüsse der Endbereiche (10) taktweise geöffnet, so daß die hier gehaltenen Flaschenreihen (14) auf den Stautisch (12) geschoben werden können. Sobald die vorgegebene Reihenlänge erreicht ist, schließen wieder die Verschlüsse der Endbereiche (10), so daß sich die nächste Flaschencharge aufstauen kann.

Die Reihenaufnahme (12) hat im Bereich der Flaschenführungen (13) jeweils mindestens einen Anschlag (15). Die Anschläge (15) können in der einfachsten Ausführungsform stationär angeordnet sein. Sie haben dabei von Reihe zu Reihe einen periodischen axialen Versatz, der vorzugsweise die Hälfte des Flaschendurchmessers beträgt. Dadurch werden die benachbarten Flaschenreihen (14) so gegeneinander versetzt angeordnet, daß ein Lückenschluß und in der späteren Flaschenlage (25) eine möglichst dichte Flaschenpackung entsteht.

In der gezeigten Ausführungsform sind die Anschläge (15) außerdem axial beweglich und besitzen hierfür einen gesteuerten Antrieb (16), der beispielsweise auf einer Tischverlängerung oder unterhalb des Stautisches (12) angeordnet ist. Bei der Übernahme einer neuen Flaschenladung werden die Anschläge (15) unmittelbar vor dem Endbereich (10) des Flaschenförderers (8) positioniert. Sobald die Verschlüsse des Endbereichs (10) öffnen und die Flaschen (3) herausdrängen, weichen die Anschläge (15) gesteuert zurück und bieten dadurch den aufgenommenen Flaschen (3) eine axiale Führung. Die Flaschen (3) können dadurch bei der Aufnahme nicht umgeworfen werden. Insgesamt sind bei der Aufnahme die Flaschen (3) rundum an vier Seiten formschlüssig geführt, wobei die rückwärtige Führung durch die nächstfolgende Flasche (3) in der Reihe erfolgt.

Nach der Übernahme stehen die Flaschenreihen (14) auf der Reihenaufnahme (12) für den Umsetzer (5) bereit. Der Umsetzer (5) ist vorzugsweise als zwei- oder mehrachsiger Roboter (11) mit frei steuer- und programmierbaren Achsen ausgebildet und besitzt eine quer zu den Flaschenreihen (14) sich erstreckende portalartige Traverse (20), an der ein oder mehrere Greifeinrichtungen (17) hin und her fahren können und die Flaschenreihen (14) auf den am Vorlauf (41) bereitstehenden Zwischenträger (6) überheben oder übersetzen.

Die Greifeinrichtung (17) ist dabei als mehrachsig beweglicher Greifkopf ausgebildet. Sie besitzt mehrere Reihengreifer (18), die die Flaschenreihen (14) in der Reihenaufnahme (12) in geeigneter Weise im Kopfbereich greifen, festhalten und auf dem Zwischenträger (6) wieder abgeben. Die Reihengreifer (18) bestehen zum Beispiel aus langen Greifkanälen mit seitlichen Greifarmen, die unter die Krägen der Flaschen fassen und diese dadurch formschlüssig halten.

Die Reihengreifer (18) können ein oder mehrere Verstelleinrichtungen (19) aufweisen. In der gezeigten Ausführungsform erlaubt die Verstelleinrichtung (19) eine Seitenbewegung der Reihengreifer (18), wodurch die Flaschenreihen (14) nach der Aufnahme enger zusammenrücken können. Im Endbereich (10) und der Reihenaufnahme (12) sind die Flaschenreihen (14) wegen Formatanpassung und aus anderen baulichen Gründen ein Stück voneinander distanziert. Dieser Seitenabstand ist größer als der in der Flaschenlage (25) erwünschte Abstand. Durch die Seitenbewegung der Reihengreifer (18) können die Flaschenreihen (14) eng aneinander geführt werden und dabei entsprechend der gewünschten Packungsdichte sogar in Kontakt miteinander gebracht werden. Die Verstelleinrichtung (19) hat hierfür einen geeigneten Antrieb nebst einer frei programmierbaren Steuerung.

Im gezeigten Ausführungsbeispiel haben die Flaschenreihen (14) und der Zwischenträger (6) die gleiche Länge. Zum Befüllen des Zwischenträgers (6) werden die Flaschenreihen (14) nebeneinandergesetzt, wobei die Greifeinrichtung (17) mehrmals hin und her fährt. In dieser gezeigten Ausführungsform ist: die auf dem Zwischenträger (6) gebildete Flaschenlage (25) so groß wie der Palettenboden.

In Abwandlung der gezeigten Ausführungsform kann ein Zwischenträger (6) auch eine Überlänge haben und zwei oder mehr Flaschenlagen (25) aufnehmen. Dadurch müssen entsprechend zwei oder mehr Flaschenreihen (14) hintereinander auf dem Zwischenträger (6) angeordnet werden. Zu diesem Zweck kann die Verstelleinrichtung (19) eine zusätzliche Beweglichkeit in Reihenlängsrichtung aufweisen und dazu beispielsweise eine Teleskopeinrichtung zum Ausfahren der Reihengreifer (18) besitzen (nicht dargestellt). Außerdem führt die Verstelleinrichtung (19) die zum Umsetzen erforderlichen Hebe- und Senkbewegungen der Reihengreifer (18) aus. Beim Umsetzvorgang bilden die Reihengreifer (18) die Flaschenführung.

Auf dem vorzugsweise wannenförmigen Zwischenträger (6) ist ebenfalls eine Flaschenführung (21) vorhanden. Sie besteht beispielsweise aus einem Gefache, in dem die Flaschen (3) ähnlich wie in der Reihenaufnahme (12) stehend und rundum formschlüssig geführt sind. In der gezeigten Ausführungsform hat: der Zwischenträger (6) dazu einen der Flaschenkontur nachgeformten Trägerrand (22), der durch entsprechende Vorsprünge auch den Reihenversatz berücksichtigt. Im Innenbereich des Zwischenträgers (6) sind eine Vielzahl hochstehender Führungspins (23) angeordnet, die zwischen je vier benachbarte Flaschen (3) greifen. Der Trägerrand (22) und die Führungspins (23) können Angleitschrägen für ein erleichtertes Einführen und Einsetzen der Flaschen (3) besitzen. Alternativ können die Flaschenführungen (21) auch auf beliebige andere Weise, z.B. durch Fachstege oder dergleichen, gebildet werden.

Unterschiedliche Ausführungsformen gibt es auch für den Palettierer (7). Der einzelne Palettierer (7) weist ein oder mehrere Palettierplätze (26) auf, an denen die Flaschenlagen (25) auf einem Palettenboden nach und nach zur fertigen Palette (35) aufgestapelt werden. Der Palettierplatz (26) ist seitlich neben der Endposition des Zwischenträgers (6) bzw. der Transporteinrichtung (24) angeordnet. Auf der anderen Seite können sich ein oder mehrere Einlagenstapel (27,28,29) in Reihe anschließen. Diese Stapel beinhalten die Palettenböden und die Zwischenlagen bzw. Decklagen, die für das Aufschichten der Flaschenlagen (25) erforderlich sind und nachfolgend als Palettiereinlagen bezeichnet werden. Bei den Zwischen- und Decklagen handelt es sich beispielsweise um Kartons oder andere geeignete flächige Materialien, die zwischen die Flaschenlagen (25) eingelegt werden.

Der Palettierer (7) besitzt mindestens eine Greifeinrichtung (30,31) für das Übersetzen der Flaschenlagen (25) vom Zwischenträger (6) auf den Palettierplatz (26) und für das Holen und Einlegen der Palettiereinlagen von den Stapeln (27,28,29). In der bevorzugten Ausführungsform sind getrennte Greifeinrichtungen (30,31) vorhanden, um die Leistung zu erhöhen.

Der Palettierer (7) ist ebenfalls vorzugsweise als linearer mehrachsiger Roboter (11) ausgebildet, der eine quer zu den Flaschenreihen sich erstreckende Traverse (20) zum Verfahren der Greifeinrichtungen (30,31) aufweist. Die Greifeinrichtungen (30,31) haben geeignete Greifköpfe, die zumindest heb- und senkbar sind und eventuell weitere Bewegungsachsen haben.

Die Greifeinrichtung (31) ist als Flaschengreifer ausgebildet, der vorzugsweise die gesamte Flaschenlage (25) greift und in einem Hub auf den Palettierplatz (26) übersetzt. Die Greifeinrichtung (31) kann für die Bedienung mehrlagiger und überlanger Zwischenträger (6) eine zusätzliche axiale Verstellbarkeit in Form einer Teleskopanordnung oder dergleichen aufweisen.

Im Ausführungsbeispiel von Figur 1 haben die beiden außenliegenden Hochleistungs-Palettierer (7) jeweils eigene Einlagenstapel (27,28,29). Die Greifeinrichtung (31) bedient beide Zwischenträger (6). Der in Figur 2 näher dargestellte mittlere Palettierer (7) ist auf eine niedrigere Leistung ausgerichtet. Er besitzt zwei voneinander distanzierte Greifeinrichtungen (31) für den jeweils einen zugeordneten Zwischenträger (6). Zwischen den Greifeinrichtungen (31) sind gemeinsame Einlagestapel (27,28,29) mit einer nach beiden Seiten arbeitenden Greifeinrichtung (30) angeordnet. Diese bedient dadurch beide Palettierplätze (26).

In der Ausführungsform von Figur 1 und 2 sind alle Greifeinrichtungen (30,31) innerhalb der einzelnen Palettierer (7) und auch anlagenübergreifend an einer gemeinsamen Traverse (20) angeordnet. In entsprechender Weise sind dabei die Einlagenstapel (27,28,29), die Palettierplätze (26) und die Endpositionen der Zwischenträger (6) in einer Reihe nebeneinander angeordnet.

An die Palettierplätze (26) schließt sich jeweils ein in Reihenlängsrichtung arbeitender Palettenförderer (32) an, der vorzugsweise unter Einschaltung einer Warteposition an einen Querförderer angeschlossen ist. Über den Querförderer werden jeweils zwei benachbarte Palettenförderer (32) miteinander verbunden und gemeinsam auf eine Verpackungseinrichtung (33) geschaltet. Hierbei können weitere Warte- und Staupositionen vorgesehen sein. Der Querförderer kann auch wie in der insoweit etwas abgewandelten Figur 2 gezeigt, für die rückseitige Beschickung der Einlagenstapel (27,28,29) eingesetzt werden.

Die am Palettierplatz (26) gebildeten fertigen Paletten (35) werden über Längs- und Querförderer einer Verpackungseinrichtung (nicht dargestellt) zugeführt und hier beispielsweise mit einer Plastikfolie umhüllt und gegebenenfalls zur Stabilisierung umreift. An der anschließenden Ausgabestation werden die verpackten Paletten (35) zur Abholung bereitgestellt und von hier beispielsweise in ein Zwischenlager und weiter zur Füllanlage (nicht dargestellt) gebracht.

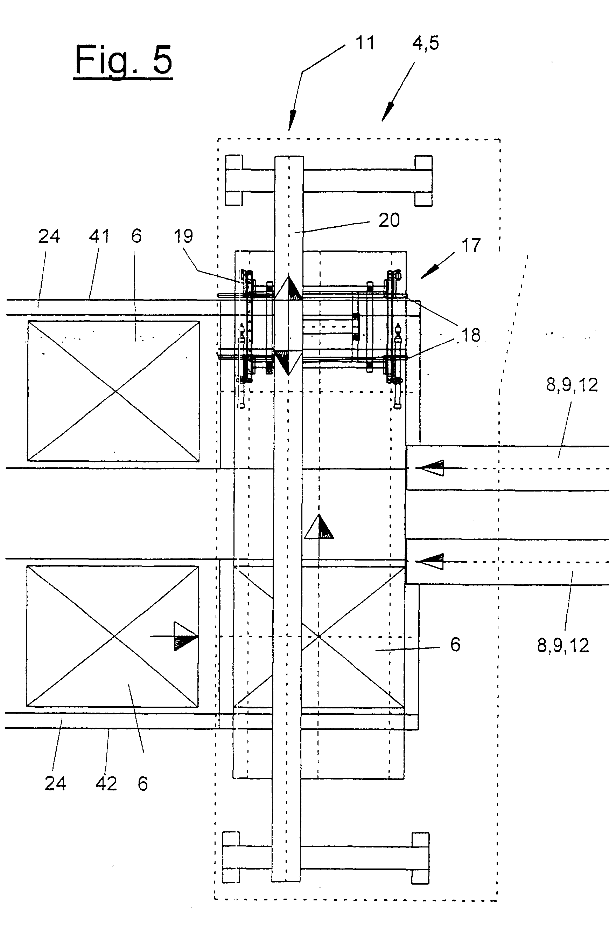

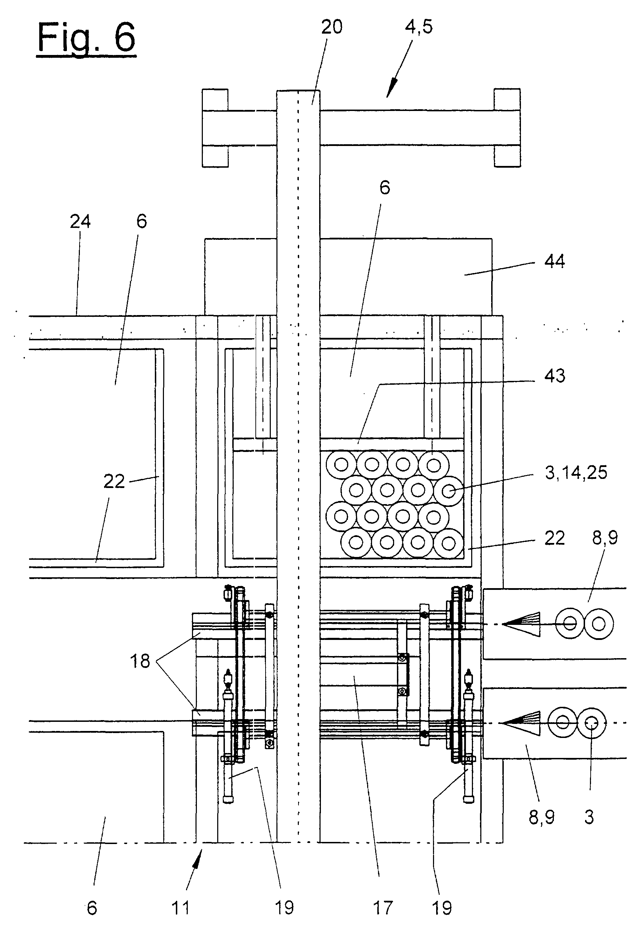

Figur 5 und 6 zeigen Abwandlungen der Sammeleinrichtung (4) bzw. des Umsetzers (5). Der Übersichtlichkeit wegen ist die Vereinzelungsvorrichtung (45) hier ebenfalls nich dargestellt. In beiden Fällen kann der Umsetzer (5) mit der oder den Greifeinrichtungen (17) die Flaschen (3) von der Vereinzelungsvorrichtung (45) übernehmen. Hierbei sind die Reihengreifer (18) in passender angeordnet, so daß die Flaschen (3) direkt von der Schnecke (46) bzw. dem Bandförderer (49) in die Reihengreifer (18) überschoben werden können. Die Verstelleinrichtungen (19) erlauben hierbei eine Anpassung und genaue Positionierung der Reihengreifer (18). Hierbei können insbesondere auch mehrere Flaschengreifer (18) gleichzeitig beladen werden.

In der gezeigten Ausführungsform hat der Greifkopf (17) zwei Flaschengreifer (18). Die Anzahl kann aber auch beliebig höher sein. Sie kann vorzugsweise mit der Zahl der Stränge (9) bzw. Flaschenförderer (8) korrespondieren. Die Zahl kann aber auch unterschiedlich sein.

Die Zwischenträger (6) in Figur 5 und 6 können der Ausführungsform von Figur 4 entsprechen. Figur 6 zeigt hierzu jedoch noch eine Abwandlung. Die Zwischenträger (6) bestehen dort aus einseitig offenen Trays mit einer Bodenplatte und drei U-förmig umlaufenden Trägerrändern (22). Anstelle der fehlenden vierten Trägerwand ist an der Beladestelle ein querbeweglicher Schieber (43) mit einem geeigneten Antrieb (44) vorgesehen. Der Schieber (43) bildet zusammen mit den vorhandenen Trägerrändern (22) die seitliche Flaschenführung (21). Bei dieser Ausführungsform hat der Zwischenträger (6) bzw. dessen Bodenplatte keine im Mittelbereich hochstehenden Führungspins (23).

Der Schieber (43) dient auch zur Positionierung und zum Zusammenschieben der Flaschen (3) auf dem Zwischenträger (6). Die Flaschenreihen (14) können vom Umsetzer (5) mit gegenseitiger seitlicher Distanz auf dem Zwischenträger (6) abgesetzt werden. Der Schieber (43) ist dazu etwas zurückgezogen und bietet den nötigen Freiraum. Anschließend fährt der Schieber (43) wieder vor und schiebt die abgestellten Flaschenreihen (14) auf die bereits eingelagerten Flaschenreihen und bildet dabei die erforderliche Packungsdichte der Flaschenlager (25). Bei dieser Vorgehensweise wird Zeit für den Umsetzer (5) gespart, was der bevorzugten Direktbeladung der Flaschengreifer (18) an den Flaschenförderern (8) zugute kommt. Außerdem können die Zwischenträger (6) dadurch beliebige Flaschenformate aufnehmen. Die Trägerränder (22) sind in diesem Fall auch als glatte Wände ohne führende Profilierung ausgebildet. In Figur 6 ist die Flaschenanordnung nur teilweise und rein schematisch dargestellt.

Für den weiteren Transport der Zwischenträger (6) kann die vierte Trägerwand entfallen. Die Flaschenlage (25) ist dann an drei Seiten umlaufend über die verbliebenen drei Trägerränder (22) geführt. Alternativ kann der Schieber (43) auch als vierte Trägerwand ausgebildet und entsprechend lösbar mit dem Antrieb (44) verbunden sein. Beim Beladen wird die Trägerwand ausgehängt und fungiert als Schieberplatte. Am Ende der Beladung wird sie in geeigneter Weise wieder mit dem Zwischenträger (6) verbunden.

Eine weitere Variante der Flaschenbehandlungsvorrichtung (1) ist auch hinsichtlich des Zwischenträgerkreislaufs möglich. In der in Figur 3 gezeigten Ausführungsform zirkulieren die Zwischenträger (6) innerhalb des Flaschenbehandlungssystems (1) zwischen der Sammeleinrichtung (4) und dem Palettierer (7). Sie werden permanent beladen und entladen, wobei sie zwischenzeitlich im beladenen oder leeren Zustand auch zwischengespeichert werden können. In der angesprochenen Abwandlung ist es möglich, die Zwischenträger (6) auch zur Bildung der Palette (35) einzusetzen und aus dem Flaschenbehandlungssystem (1) zu entlassen. In diesem Fall haben die Zwischenträger (6) vorzugsweise die in Figur 4 gezeigten Flaschenführungen (21). Außerdem können die Zwischenträger (6) auch geeignete gegenseitige Führungen haben, um auf einfache und selbstzentrierende Weise übereinander zur Palettenbildung gestapelt werden zu können. Zu diesem Zweck ist auch der Palettierer (7) mit seinem Roboter (11) entsprechend in geeigneter Weise ausgebildet und greift statt der einzelnen Flaschenlagen (25) den ganzen Zwischenträger (6) und setzt ihn zur Palettenbildung um. Bei dieser Variante zirkulieren die Zwischenträger (6) in einem größeren Kreislauf, der über die Füllanlage, den oder die Zwischenhändler und den Kunden wieder zurück über eine Wiederaufbereitungs-oder Reinigungsanlage zum Flaschenbehandlungssystem (1) führt. Der zirkulierende Zwischenträger (6) nimmt dabei nicht nur die im Flaschenbehandlungssystem (1) aufgeladenen leeren Flaschen (3), sondern nach der Befüllung auch die vollen Flaschen auf.

Abwandlungen der gezeigten und beschriebenen Ausführungsform sind in verschiedener Weise möglich. Die Vereinzelungsvorrichtung (45) kann statt der Schnecke (46) auch ein beliebiges anderes geeignetes Organ zum Vereinzeln und zumindest zeitweise trennen der Flaschen (3) aufweisen. Auch die konstruktive Ausbildung der Gleitstrecke (49), der Zähleinrichtung (50) und der Staustrecke (52) kann variieren. Die Staustrecke (52) kann unter Umständen auch entfallen. Der Flaschenförderer (8) kann in beliebig geeigneter Weise ausgebildet sein. Statt eines Luftförderers mit hängend transportierten Flaschen (3) kann auch ein Standförderer mit Rollen, Förderband oder dergleichen anderen geeigneten Transportmechanismen vorgesehen sein. Ferner kann die Zahl der Flaschenreihen (14) im Bereich des Flaschenförderers (8) und der Reihenaufnahme (12) bzw. des Umsetzers (5) variieren. Zwischen den besagten Komponenten müssen auch nicht immer die Reihenzahlen gleich sein. Entsprechendes gilt für die Greifeinrichtung (31) zum Übersetzen der Flaschenlagen (25) am Palettierplatz (26). Diese Greifeinrichtung (31) kann in der einen Variante nur einen Teil der Flaschenlage (25) greifen und übersetzen. In der anderen Variante mit überlangen Zwischenträgern (6) ist es möglich, mehrere Flaschenlagen (25) auf einmal zu greifen. In der beschriebenen Ausführungsform ist die Flaschenlage (25) so groß wie die Palettenbodenfläche. Diese Größenangabe ist eine Definitionsfrage und kann auch abgewandelt werden. Unter Umständen werden an einer Sammel- und Palettieranlage (2) auch verschiedene Palettengrößen und/oder Flaschenformate verarbeitet, so daß der Zwischenträger (6) nur teilweise befüllt ist. Variabel sind ferner auch die konstruktive Ausbildung der technischen Komponenten der Sammel- und Palettieranlagen (2), insbesondere der Reihenaufnahme (12), des Umsetzers (5), des Palettierers (7), des Zwischenträgers (6) und dergleichen. Insbesondere können die Greifeinrichtungen zum Erfassen der Flaschenreihen (14) in beliebig geeigneter Weise ausgebildet sein. Der Zwischenträger (6) kann plattenförmig sein oder eine beliebige andere geeignete Gestaltung als Behälter oder Träger für die Flaschenlagen haben. Die Flaschenbehandlungsvorrichtung (1) kann ferner ohne einen Palettierer (7) auskommen. Statt dessen oder ergänzend können ein oder mehrere andere Einrichtungen vorgesehen sein, wie z.B. eine Waschanlage für Flaschen, eine Füllanlage, eine Etikettierstation oder dergleichen. Ferner kann auch der Flaschenerzeuger (36) entfallen. Die Flaschenbehandlungsvorrichtung (1) kann statt dessen mit extern angelieferten Flaschen (3) gegebenenfalls auch mit wiederverwendbaren gebrauchten Flaschen arbeiten.

### BEZUGSZEICHENLISTE

- 1: Flaschenbehandlungssystem
- 2: Sammel- und Falettieranlage
- 3: Flasche
- 4: Sammeleinrichtung
- 5: Umsetzer
- 6: Zwischenträger
- 7: Palettierer
- 8: Flaschenförderer
- 9: Strang
- 10: Endbereich
- 11: Roboter
- 12: Reihenaufnahme, Stautisch
- 13: Flaschenführung, Geländer
- 14: Flaschenreihe
- 15: Anschlag
- 16: Antrieb
- 17: Greifeinrichtung, Greifkopf
- 18: Flaschenführung, Reihengreifer
- 19: Verstelleinrichtung
- 20: Traverse
- 21: Flaschenführung
- 22: Trägerrand
- 23: Führungspin
- 24: Transporteinrichtung, Shuttle
- 25: Flaschenlage
- 26: Palettierplatz
- 27: Einlagenstapel Palettenboden
- 28: Einlagenstapel Zwischenlage
- 29: Einlagenstapel Decklage
- 30: Greiferinrichtung Palettiereinlagen
- 31: Greiferinrichtung Flaschenlage
- 32: Palettenförderer
- 33: Verpackungseinrichtung
- 34: Ausgabestation
- 35: Palette
- 36: Flaschenerzeuger, Blasmaschine
- 37: Zwischenlager
- 38: Eingabe
- 39: Ausgabe
- 40: Regalförderzeug
- 41: Vorlauf
- 42: Rücklauf
- 43: Schieber
- 44: Antrieb
- 45: Vereinzelungsvorrichtung
- 46: Schnecke
- 47: Gang
- 48: Wand
- 49: Gleitstrecke, Plattenbandförderer
- 50: Zähleinrichtung, Lichtschranke
- 51: Förderrichtung
- 52: Staustrecke

## Patentansprüche

1. Vorrichtung zum Behandeln von Flaschen (3), insbesondere leeren Kunststoffflaschen, mit mindestens einer Sammeleinrichtung (4) zur Übernahme der von einem Flaschenerzeuger (36) oder einem Flaschenförderer (8) in ein oder mehreren Schlangen (9) hintereinander zugeführten Flaschen, wobei die Sammeleinrichtung (4) mindestens einen Umsetzer (5) und ein oder mehrere transportable Zwischenträger (6) zur lagenweisen (25) Aufnahme der Flaschen (3) aufweist, **dadurch gekennzeichnet,** daß vor dem Umsetzer (5) mindestens eine Vereinzelungsvorrichtung (45) angeordnet ist.

2. Vorrichtung nach Anspruch 1, **dadurch gekennzeichnet,** daß vor der Vereinzelungsvorrichtung (45) eine Staustrecke (52) für die Flaschen (3) angeordnet ist.

3. Vorrichtung nach Anspruch 1 oder 2, **dadurch gekennzeichnet,** daß die Vereinzelungsvorrichtung (45) eine Schnecke (46) aufweist.

4. Vorrichtung nach Anspruch 1, 2 oder 3, **dadurch gekennzeichnet,** daß die Schnecke (46) konisch ausgebildet ist und sich im wesentlichen längs der Förderrichtung (51) erstreckt, wobei die Konusform sich in Förderrichtung (51) verbreitert, wobei die Schneckensteigung im wesentlichen dem Flaschendurchmesser entspricht.

5. Vorrichtung nach einem der Ansprüche 1 bis 4, **dadurch gekennzeichnet,** daß der Vereinzelungsvorrichtung (45) eine Gleitstrecke (49) für die Flaschen (3) zugeordnet ist, die als angetriebener Bandförderer ausgebildet ist.

6. Vorrichtung nach einem der Ansprüche 1 bis 5, **dadurch gekennzeichnet,** daß der Vereinzelungsvorrichtung (45) eine Zähleinrichtung (50) für die Flaschen (3) zu- oder nachgeordnet ist.

7. Vorrichtung nach einem der Ansprüche 1 bis 6, **dadurch gekennzeichnet,** daß eine hin- und hergehende oder im Kreis umlaufende Transporteinrichtung (24) für den oder die Zwischenträger (6) vorgesehen ist, die sich von der Sammeleinrichtung (4) zu einem Palettierer (7), einer Füllanlage und/oder einer anderen Einrichtung erstreckt.

8. Vorrichtung nach einem der Ansprüche 1 bis 7, **dadurch gekennzeichnet,** daß mindestens ein Lager (37) zur Zwischenspeicherung befüllten und/oder leeren Zwischenträgern (6) vorgesehen ist.

9. Vorrichtung nach einem der Ansprüche 1 bis 8, **dadurch gekennzeichnet,** daß die Sammeleinrichtung (4) direkt am Flaschenerzeuger (36), insbesondere an einer Blasmaschine, angeordnet ist.

10. Vorrichtung nach einem der Ansprüche 1 bis 9, **dadurch gekennzeichnet**, daß der Umsetzer (5) mindestens eine Greifeinrichtung (17) mit mehreren seitlich verstellbaren (19) Reihengreifern (18) aufweist.

11. Vorrichtung nach einem der Ansprüche 1 bis 10, **dadurch gekennzeichnet,** daß der Zwischenträger (6) ein oder mehrere Flaschenlagen (25) aufnimmt.

12. Vorrichtung nach einem der Ansprüche 1 bis 11, **dadurch gekennzeichnet,** daß der Umsetzer (5) und der Palettierer (7) als linear mehrachsige Roboter (11) mit Traversen (20) und daran verfahrbaren sowie heb- und senkbaren Greifeinrichtungen (17,30,31) ausgebildet sind.

## Claims

1. Apparatus for handling bottles (3), in particular empty plastic bottles, having at least one collecting arrangement (4) for receiving the bottles fed one behind the other into one or more lines (9) by a bottle-producing machine (36) or a bottle conveyor (8), the collecting arrangement (4) having at least one transfer system (5) and one or more transportable intermediate carriers (6) for accommodating the bottles (3) in layers (25), **characterized in that** at least one separating apparatus (45) is arranged upstream of the transfer system (5).

2. Apparatus according to Claim 1, **characterized in that** an accumulating section (52) for the bottles (3) is arranged upstream of the separating apparatus (45).

3. Apparatus according to Claim 1 or 2, **characterized in that** the separating apparatus (45) has a worm (46).

4. Apparatus according to Claim 1, 2 or 3, **characterized in that** the worm (46) is of conical design and extends essentially along the conveying direction (51), the conical shape widening in the conveying direction (51) and the worm pitch corresponding essentially to the bottle diameter.

5. Apparatus according to one of Claims 1 to 4, **characterized in that** the separating apparatus (45) is assigned a sliding section (49) for the bottles (3), said section being designed as a driven belt conveyor.

6. Apparatus according to one of Claims 1 to 5, **characterized in that** a counting device (50) for the bottles (3) is assigned to, or arranged downstream of, the separating apparatus (45).

7. Apparatus according to one of Claims 1 to 6, **characterized in that** a transporting arrangement (24), which moves back and forth or circulates, is provided for the intermediate carrier or carriers (6), said arrangement extending from the collecting arrangement (4) to a palletizer (7), a filling installation and/or some other arrangement.

8. Apparatus according to one of Claims 1 to 7, **characterized in that** at least one storage area (37) for the intermediate storage of filled and/or empty intermediate carriers (6) is provided.

9. Apparatus according to one of Claims 1 to 8, **characterized in that** the collecting arrangement (4) is arranged directly on the bottle-producing machine (36), in particular on a blow-moulding machine.

10. Apparatus according to one of Claims 1 to 9, **characterized in that** the transfer system (5) has at least one gripping arrangement (17) with a plurality of laterally adjustable (19) row grippers (18).

11. Apparatus according to one of Claims 1 to 10, **characterized in that** the intermediate carrier (6) accommodates one or more bottle layers (25).

12. Apparatus according to one of Claims 1 to 11, **characterized in that** the transfer system (5) and the palletizer (7) are designed as linearly multiaxial robots (11) with. crossmembers (20) and gripping arrangements (17, 30, 31) which can be raised and lowered and displaced thereon.

## Revendications

1. Dispositif de traitement de bouteilles (3), notamment de bouteilles vides en matière plastique, comportant au moins un dispositif (4) collecteur pour prendre en charge des bouteilles apportées les unes à la suite des autres en une ou plusieurs files (9) par une machine (36) de fabrication de bouteilles ou un transporteur (8) de bouteilles, le dispositif (4) collecteur comportant au moins un dispositif (5) de transfert et un ou plusieurs éléments (6) porteurs intermédiaires pour recevoir en couches (25) les bouteilles (3), **caractérisé en ce qu**'au moins un dispositif (45) d'individualisation est disposé avant le dispositif (5) de transfert.

2. Dispositif suivant la revendication 1, **caractérisé en ce qu**'un parcours (52) d'accumulation, pour les bouteilles (3) est disposé avant le dispositif (45) d'individualisation.

3. Dispositif suivant la revendication 1 ou 2, **caractérisé en ce que** le dispositif (45) d'inclividualisation comporte une vis (46) sans fin.

4. Dispositif suivant la revendication 1, 2 ou 3, **caractérisé en ce que** la vis (46) sans fin est réalisée conique et s'étend essentiellement le long de la direction (51) de transport, la forme conique s'élargissant dans la direction (51) de transport et le pas de vis correspondant essentiellement au diamètre des bouteilles.

5. Dispositif suivant l'une des revendications 1 à 4, **caractérisé en ce qu**'un parcours (49) de glissement pour les bouteilles (3), qui est réalisé sous forme de transporteur entraîné à bande, est assccié au dispositif (45) d'individualisation.

6. Dispositif suivant l'une des revendications 1 à 5, **caractérisé en ce qu**'un dispositif (50) de comptage pour les bouteilles (3) est associé au dispositif (45) d'individualisation, ou disposé après celui-ci.

7. Dispositif suivant l'une des revendications 1 à 6, **caractérisé en ce qu**'un dispositif (24) de transport circulant en navette ou en circuit est prévu pour le ou les éléments (6) porteurs intermédiaires, dispositif qui s'étend depuis le dispositif (4) collecteur jusqu'à un palettiseur (7), une installation de remplissage et/ou un autre équipement.

8. Dispositif suivant l'une des revendications 1 à 7, **caractérisé en ce qu**'au moins un magasin (37) est prévu pour le stockage intermédiaire d'éléments (6) porteurs intermédiaires remplis et/ou vides.

9. Dispositif suivant l'une des revendications 1 à 8, **caractérisé en ce que** le dispositif (4) collecteur est disposé directement sur la machine (36) de fabrication de bouteilles, notamment sur une machine de soufflage.

10. Dispositif suivant l'une des revendications 1 à 9, **caractérisé en ce que** le dispositif (5) de transfert comprend au moins un dispositif (17) de préhension, pourvu de plusieurs preneurs (18) de rangées latéralement réglables (19).

11. Dispositif suivant l'une des revendications 1 à 10, **caractérisé en ce que** l'élément (6) porteur intermédiaire reçoit une ou plusieurs couches (25) de bouteilles.

12. Dispositif suivant l'une des revendications 1 à 11, **caractérisé en ce que** le dispositif (5) de transfert et le palettiseur (7) sont réalisés sous forme de robots (11) à plusieurs axes linéaires, pourvus d'une traverse (20) et de dispositifs (17, 30, 31) de préhension pouvant y être déplacés en translation ainsi que relevés et abaissés.
